# EUROPÄISCHE PATENTSCHRIFT

(11) **EP 1 281 596 B1**
(45) Veröffentlichungstag und Bekanntmachung des Hinweises auf die Patenterteilung: **28.06.2006**
(21) Anmeldenummer: 02014577.7
(22) Anmeldetag: 02.07.2002
(51) Int. Cl.: B62D 1/04, B62D 7/22, B60R 21/20

(54) **Kraftfahrzeuglenkung mit einem Schwingungstilger**
Vehicle steering apparatus with vibration damper
Direction de véhicule avec amortisseur de vibrations

(30) Priorität: 02.08.2001 DE 10137995
(43) Veröffentlichungstag der Anmeldung: 05.02.2003
(73) Patentinhaber: Bayerische Motoren Werke Aktiengesellschaft, 80809 München (DE)
(72) Erfinder: Wurzer, Oliver, 80538 München (DE); Ertlmaier, Stephan, 85737 Ismaning (DE); Pregl, Alexander, 80999 München (DE); Bertram, Alexander, 80339 München (DE)

(56) Entgegenhaltungen:
- DE-A- 19 731 314
- DE-A- 19 913 120
- US-B1- 6 209 696

## Beschreibung

Die Erfindung betrifft eine Kraftfahrzeuglenkung mit einem Schwingungstilger für die über eine Lenkspindel in eine Lenkhandhabe, insbesondere ein Lenkrad, eingeleiteten Drehschwingungen. Zum technischen Umfeld wird neben der DE 37 10 173 C2 insbesondere auf die DE-OS 2 249 655 verwiesen.

An Kraftfahrzeugen treten im Betrieb naturgemäß eine Vielzahl von Schwingungen auf, die u.a. auch in das Lenksystem des Fahrzeugs eingeleitet werden können. Da der Fahrzeugführer das Lenkrad bzw. allgemein eine Lenkhandhabe stets in den Händen hält, werden hier deutliche spürbare Schwingungen, wie sie insbesondere im Bereich der Eigenfrequenzen des durch die Kraftfahrzeug-Lenkung sowie die Fahrzeugachse mit den lenkbaren Rädern gebildeten schwingungsfähigen Systems auftreten, als unangenehm empfunden. Grundsätzlich hat dieses schwingungsfähige System mehrere Eigenfrequenzbereiche, die unterschiedlich störend empfunden werden. Geeignete Maßnahmen zur Tilgung oder zumindest Dämpfung solcher Schwingungen sind daher wünschenswert.

So ist bspw. in der o.g. DE 37 10 173 C2 vorgeschlagen, bei einer Kraftfahrzeuglenkung mit einem Lenkrad mit integrierter Aufprallschutzvorrichtung, die in einem innerhalb des Lenkradkranzes angeordneten Gehäuse untergebracht ist, dieses Gehäuse gegenüber dem Lenkrad in bezüglich der Lenksäulen-Längsachse senkrechter Richtung gedämpft schwimmend und dabei in dieser Richtung bewegbar zu lagern. Diese gedämpft schwimmende Lagerung des Aufprallschutzvorrichtungs-Gehäuses senkt die Schwingungsamplituden des Lenkrads erheblich ab. Abgesenkt werden mit diesem bekannten Stand der Technik (sowie mit einer Vielzahl von Weiterbildungen hiervon, die in diversen Druckschriften beschrieben sind) die Amplituden von in der Ebene senkrecht zur Lenksäulen-Längsachse auftretenden im wesentlichen geradlinig oszillierenden Schwingungsbewegungen, d.h. von Schwingungen, die in der zur Lenksäulen-Längsachse senkrechten Ebene bspw. in Horizontalrichtung oder in Vertikalrichtung auftreten.

Neben den im wesentlichen geradlinigen (linearen) Schwingungen von Kraftfahrzeug-Lenkrädern können an diesen auch periodische Drehschwingungen auftreten, die durch an den lenkbaren Fahrzeug-Rädern wirkende Kräfte, nämlich insbesondere durch die infolge Unwucht der Räder verursachten Zentrifugalkräfte angeregt werden. Eine weitere Ursache für Lenkrad-Drehschwingungen sind auftretende Drehmomentschwankungen beim Bremsen, die bspw. durch Ungleichförmigkeiten an der Bremsscheibe verursacht werden.

In der oben zweitgenannten DE-OS 2 249 655 ist zur Verringerung derartiger Lenkrad-Drehschwingungen ein auf die Eigenfrequenz des Lenksystems abgestimmter hydraulischer Tilgerdämpfer vorgeschlagen, bei dem eine auf Federn abgestützte Tilgermasse in einem hydraulischen Dämpfungsmedium mit großen Ausschlägen schwingt. In der Praxis jedoch haben sich Drehschwingungs-Tilger in Kraftfahrzeug-Lenksystemen noch nicht umfassend durchgesetzt, nachdem die bisherigen Bestrebungen, Lenkraddrehschwingungen durch den Einsatz eines Drehschwingungstilgers zu vermindern, nach den Erkenntnissen der Erfinder zur vorliegenden Patentanmeldung durch die im weiteren erläuterten konzeptionelle Probleme behindert wurden.

Lenkraddrehschwingungen treten nämlich je nach Lastfall bei verschiedenen, in einem weiten Bereich variierenden Resonanzfrequenzen auf. Dieses Verhalten resultiert insbesondere aus dem progressiven Verlauf der Steifigkeit desjenigen Lagers, das für die Längssteifigkeit der betroffenen Fahrzeugachse in Abhängigkeit von der tatsächlichen Bremskraft maßgeblich ist, d.h. von der Steifigkeit des sog. Bremspuffers. Somit liegt die Resonanzfrequenz einer Lenkraddrehschwingung während eines Bremsvorganges beispielsweise um 50% bis 100% höher als die entsprechende Resonanzfrequenz des selben schwingungsfähigen Systems (gebildet im wesentlichen durch die Kraftfahrzeug-Lenkung sowie die Fahrzeugachse mit den lenkbaren Rädern) bei ungebremster Fahrt des Kraftfahrzeugs.

Die klassische Auslegung eines Schwingungstilgers geschieht nun so, dass die Eigenfrequenz dieses Schwingungstilgers in die direkte Umgebung der Resonanzfrequenz des zu tilgenden Schwingungsphänomens gelegt wird, so wie dies auch in der genannten DE-OS 2 249 655 beschrieben ist. Eine derartige Abstimmung führt aber zu einem störenden zusätzlichen Schwingungsmaximum oberhalb der ursprünglichen Resonanzfrequenz.

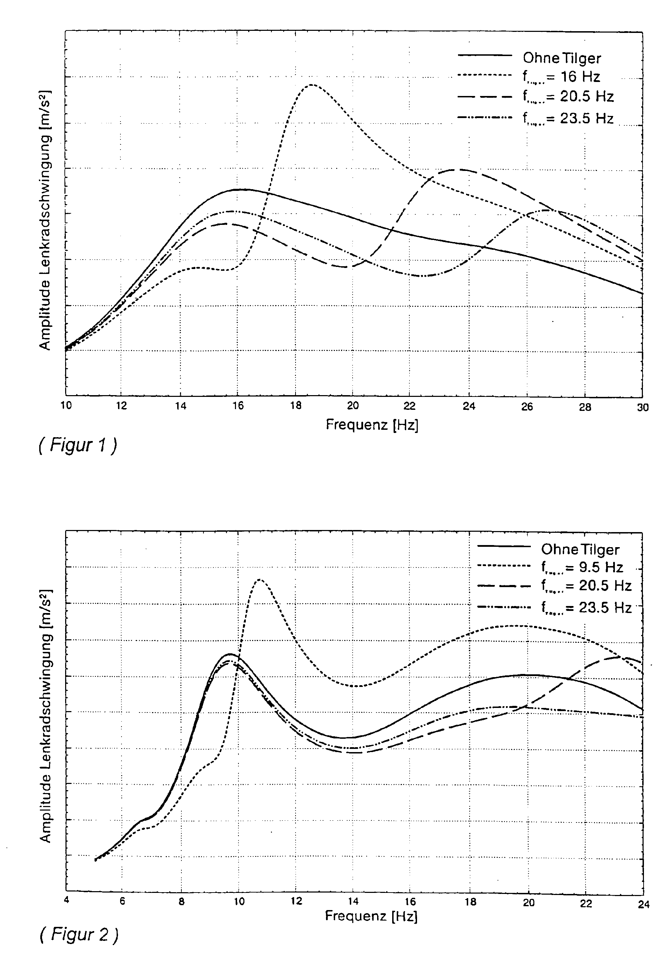

Hierzu wird auf die beigefügten **Figuren 1, 2** verwiesen, in denen rechnerische Simulationsergebnisse für an einer Kraftfahrzeuglenkung vorgesehene Drehschwingungstilger mit unterschiedlichen Eigenfrequenzen dargestellt sind. Das hierbei verwendete Rechenmodell der Kraftfahrzeuglenkung bzw. des bereits mehrfach genannten schwingungsfähigen Systems ist Bestandteil eines virtuellen Gesamtfahrzeugmodells, mit welchem die Simulationsrechnung durchgeführt wurde.

Auf der Abszisse jedes Schaubildes der **Figuren 1, 2** ist die Schwingungsfrequenz des schwingungsfähigen Systems (gebildet durch die Kraftfahrzeuglenkung sowie die Fahrzeugachse mit den lenkbaren Rädern) in [Hz] und auf der Ordinate die dazugehörige Amplitude der Lenkradschwingung in [m/s²] aufgetragen, und zwar jeweils für ein Lenksystem ohne Tilger sowie für dieses Lenksystem mit einem Drehschwingungstilger, dessen Eigenfrequenz bei 9,5 Hz bzw. 16 Hz oder bei 20,5 Hz oder bei 23,5 Hz liegt. Dabei sind in **Figur 1** die Simulationsergebnisse bei gebremstem Kraftfahrzeug, d.h. bei mäßiger (mittlerer) Betätigung der an den gelenkten Rädern vorgesehenen Bremsen, und in **Figur 2** die Simulationsergebnisse bei freirollendem, ungebremstem Kraftfahrzeug dargestellt. Eine mäßige oder mittlere Bremsenbetätigung resultiert dabei in einer Verzögerung der Fahrzeugs in der Größenordnung von 2,5 m/s² bis 3,5 m/s².

Weiter oben wurde ausgeführt, dass sich ein störendes zusätzliches Schwingungsmaximum oberhalb der ursprünglichen Resonanzfrequenz des schwingungsfähigen Systems einstellt, wenn die Eigenfrequenz dieses Schwingungstilgers in die direkte Umgebung der Resonanzfrequenz des zu tilgenden Schwingungsphänomens gelegt wird. Im gebremsten Fall **(Fig.1)** liegt die Eigenfrequenz des bereits mehrfach genannten schwingungsfähigen Systems, bei der eine ausgeprägte Drehschwingung am Lenkrad oder dgl. auftritt, in der Größenordnung von 16 Hz und im freirollenden Fall (**Fig.2**) in der Größenordnung von 9,5 Hz. Wie die jeweiligen Kurvenverläufe zeigen, wird mit einem solchermaßen ausgelegten Schwingungstilger im Bereich der Resonanzfrequenz zwar eine erhebliche Verbesserung gegenüber einer Variante ohne Tilger erzielt, im darüber liegenden Frequenzbereich ergibt sich mit diesem Schwingungstilger jedoch eine erhebliche Verschlechterung, d.h. es stellen sich deutlich größere Amplituden der LenkradDrehschwingung ein als ohne Schwingungstilger. Somit kann ein klassisch ausgelegter Tilger nur bei einer definierten Resonanzfrequenz die Lenkraddrehschwingung wirksam mindern. Bei anderen Lastfällen in einem weiten Frequenz-Bereich, der aufgrund der unterschiedlichen Fahrzustände und weiteren Einflussgrößen nicht unbeachtet bleiben kann, zeigt jedoch ein derartig konventionell abgestimmter Tilger einen negativen Einfluss auf das Schwingungsverhalten des Lenkrades oder der Lenkhandhabe.

Eine Abhilfemaßnahme für diese geschilderte Problematik aufzuzeigen, ist Aufgabe der vorliegenden Erfindung.
Die Lösung dieser Aufgabe ist dadurch gekennzeichnet, dass die Eigenfrequenz des Schwingungstilgers auf das 1,2-fache bis 1,5-fache der Drehschwingungs-Resonanzfrequenz des durch die Fahrzeugachse mit den lenkbaren Rädern sowie durch die der Kraftfahrzeug-Lenkung gebildeten schwingungsfähigen Systems, die sich bei einem Abbremsen der lenkbaren Räder des Kraftfahrzeugs einstellt, ausgelegt ist. Vorteilhafte Aus- und Weiterbildungen sind Inhalt der Unteransprüche.

Durch eine erfindungsgemäße, quasi "überkritische" Abstimmung des Drehschwingungs-Tilgers werden die genannten Probleme umgangen. Die Eigenfrequenz des Tilgers wird auf das 1,2- bis 1,5-fache der Resonanzfrequenz der ohne Tilger zu beobachtenden Lenkraddrehschwingung im gebremsten Fall ausgelegt. In den **Figuren 1, 2** dargestellt ist dieser Sachverhalt dabei für zwei verschiedene Schwingungstilger mit den Eigenfrequenzen 20,5 Hz bzw. 23,5 Hz.

Mit dieser Auslegung ergibt sich nicht nur eine deutliche Minderung der Lenkraddrehschwingung im Resonanzbereich, sondern es wird auch die unerwünschte Amplitudenüberhöhung durch den Schwingungstilger in einen deutlich höheren Frequenzbereich verschoben, wie aus den in den beigefügten Figuren wiedergegebenen Simulationsergebnissen hervorgeht. In diesem relativ hohen Frequenzbereich (größer 22 Hz sowohl im freirollenden als auch im gebremsten Fall) werden Lenkraddrehschwingungen subjektiv als weniger störend empfunden.

Da der Schwingungstilger erfindungsgemäß nun nicht für eine diskrete Resonanzfrequenz abgestimmt werden muss, lässt sich für gebremste Lastfälle, bei denen die Resonanzfrequenz je nach Bremsdruck und resultierender Achslängssteifigkeit um 10-20% variiert, im genannten Abstimmbereich eine Einstellung finden, die für alle gebremsten Fälle zu einer ähnlich guten Verbesserung der Lenkraddrehschwingung führt. Bevorzugt erfolgt dabei die Auslegung solchermaßen, dass der Bremsdruck, mit dem die lenkbaren Räder abgebremst werden, um die für die Auslegung des Schwingungstilgers relevante Drehschwingungs-Resonanzfrequenz des genannten schwingungsfähigen Systems (Fahrzeugachse mit den lenkbaren Rädern sowie Kraftfahrzeuglenkung) zu ermitteln, im Bereich einer mäßigen oder mittleren Abbremsung liegt. Hierunter wird eine derartige Abbremsung verstanden, die zu einer Fahrzeug-Verzögerung in der Größenordnung von 2,5 m/s² bis 3,5 m/s² führt. Beim konkrekt vorliegenden Simulationsmodell entspricht dies eine Bremsdruck in der Größenordnung von 15 bar bis 20 bar.

Dabei hat sich herausgestellt, dass dieser Bereich der mäßigen Abbremsung von den Fahrzeugführern als der kritischste Bereich bezüglich des Auftretens von Lenkrad-Drehschwingungen gewertet wird. Bei einer wesentlich geringerer Abbremsung ist praktisch keine Schwingungsanregung durch den Bremsvorgang feststellbar und bei einer wesentlich stärkeren Abbremsung wird der Bereich, in dem Lenkrad-Drehschwingungen auftreten, sehr schnell durchfahren und daher weniger als störend empfunden.

Im ungebremsten Fall liegt die Resonanzfrequenz der Lenkraddrehschwingung je nach Feinabstimmung in etwa bei der halben Eigenfrequenz des auf die genannte Weise abgestimmten Schwingungstilgers. Somit hat der Schwingungstilger zwar keinen allzu großen positiven Einfluss auf die Schwingungsamplitude bei Resonanzfrequenz (vgl. in **Figur 2** die Resonanzstelle bei 9,5 Hz), jedoch wirkt hier vorteilhafterweise das Massenträgheitsmoment des Drehschwingungstilgers zusammen mit dem Trägheitsmoment des Lenkrads schwingungsmindernd.

Im übrigen bietet bei Verwendung hydraulischer Fahrwerks-Lager (sog. Hydrobuchsen) zur Bedämpfung der Längsbewegung des jeweiligen Fahrzeug-Rades die beschriebene Abstimmung des Drehschwingungstilgers einen weiteren Vorteil für den ungebremsten Lastfall. Hydraulische Fahrwerkslager haben nämlich die Eigenschaft, sich bei höheren Frequenzen dynamisch zu versteifen, was im Zusammenspiel mit dem Fahrwerk zu einer zweiten Amplitudenüberhöhung der Drehschwingung am Lenkrad führen kann. Diese Amplitudenüberhöhung liegt nun in demjenigen Bereich, in dem ein Schwingungstilger mit der beschriebenen Abstimmung maximale Wirkung zeigt, und wird daher durch den erfindungsgemäß ausgelegten Schwingungstilger deutlich vermindert, wie aus der Darstellung **Figur 2** durch Vergleich mit dem Kurvenverlauf ohne Tilger hervorgeht.

Grundsätzlich kann ein erfindungsgemäß ausgelegter Dreh-Schwingungstilger an jeder geeigneten Stelle der Kraftfahrzeuglenkung angebracht sein, u.a. in Abhängigkeit vom Tilger-Wirkprinzip kann es auch unter Bauraum-Aspekten jedoch besonders vorteilhaft sein, wenn dieser Schwingungstilger in die Lenkhandhabe (in das Lenkrad) integriert ist. Dabei kann eine Airbag-Einheit oder Teile davon, die in der Lenkhandhabe integriert ist/sind, als Schwingungstilger fungieren, jedoch kann dies sowie eine Vielzahl weiterer Details durchaus abweichend von obigen Erläuterungen gestaltet sein, ohne den Inhalt der Patentansprüche zu verlassen. Dabei sei noch darauf hingewiesen, dass die in den **Figuren 1, 2** dargestellten Simulationsergebnisse den Amplitudenverlauf der Drehschwingung am Lenkrad für den gebremsten bzw. freirollenden Betriebsfall, jeweils gemessen an einem Beschleunigungsaufnehmer am Lenkradkranz zeigen. Das Massenträgheitsmoment des Tilgers entspricht bei der Betrachtung dem Massenträgheitsmoment der Airbageinheit, wobei für den Fall "ohne Tilger" das entsprechende Massenträgheitsmoment dem Lenkrad zugerechnet wurde.

## Patentansprüche

1. Kraftfahrzeuglenkung mit einem Schwingungstilger für die über eine Lenkspindel in eine Lenkhandhabe, insbesondere ein Lenkrad, eingeleiteten Drehschwingungen,
**dadurch gekennzeichnet, dass** die Eigenfrequenz des Schwingungstilgers auf das 1,2-fache bis 1,5-fache der niedrigstfrequenten Drehschwingungs-Resonanzfrequenz des durch die Fahrzeugachse mit den lenkbaren Rädern sowie durch die Kraftfahrzeug-Lenkung gebildeten schwingungsfähigen Systems, die sich bei einem Abbremsen dieser lenkbaren Räder einstellt, ausgelegt ist.

2. Kraftfahrzeuglenkung nach Anspruch 1,
**dadurch gekennzeichnet, dass** der Bremsdruck, mit dem die lenkbaren Räder abgebremst werden, um die für die Auslegung des Schwingungstilgers relevante Drehschwingungs-Resonanzfrequenz des durch die Fahrzeugachse mit den lenkbaren Rädern sowie durch die Kraftfahrzeug-Lenkung gebildeten schwingungsfähigen Systems zu ermitteln, einer mäßigen Abbremsung mit einer Verzögerung in der Größenordnung von 2,5 m/s² bis 3,5 m/s² entspricht.

3. Kraftfahrzeuglenkung nach einem der vorangegangenen Ansprüche,
**dadurch gekennzeichnet, dass** der Schwingungstilger in die Lenkhandhabe integriert ist.

4. Kraftfahrzeuglenkung nach Anspruch 3,
**dadurch gekennzeichnet, dass** eine Airbag-Einheit oder Teile davon, die in der Lenkhandhabe integriert ist/sind, als Schwingungstilger fungiert.

## Claims

1. Motor vehicle steering apparatus comprising a vibration absorber for the rotary vibrations introduced via a steering shaft into a steering handle, more especially a steering wheel, **characterised in that** the natural frequency of the vibration absorber is set at 1.2 to 1.5 times the lowest frequency rotary vibration resonance frequency of the vibrational system formed by the vehicle axle with the steerable wheels and by the motor vehicle steering apparatus, which occurs during a braking of these steerable wheels.

2. Motor vehicle steering apparatus according to claim 1, **characterised in that** in order to determine the relevant rotary vibration resonance frequency for the configuration of the vibration absorber, of the vibrational system formed by the vehicle axle with the steerable wheels and by the motor vehicle steering apparatus, the braking pressure, with which the steerable wheels are braked corresponds to a moderate braking with a deceleration in the order of magnitude of 2.5 m/s² to 3.5 m/s².

3. Motor vehicle steering apparatus according to any one of the preceding claims, **characterised in that** the vibration absorber is integrated into the steering handle.

4. Motor vehicle steering apparatus according to claim 3, **characterised in that** an airbag unit, or parts thereof, which is/are integrated in the steering handle, act as a vibration absorber.

## Revendications

1. Direction de véhicule à moteur avec un amortisseur de vibrations torsionnelles introduites, par l'intermédiaire d'un arbre de direction, dans une commande manuelle de direction et en particulier dans un volant,
**caractérisée en ce que**
la fréquence propre de l'amortisseur de vibrations est dimensionnée de 1,2 fois jusqu'à 1,5 fois la fréquence de résonance de vibration torsionnelle la plus basse du système vibrant formé par l'essieu du véhicule, les roues dirigeables et la direction du véhicule à moteur, fréquence qui s'ajuste lors d'un freinage des roues dirigeables.

2. Direction de véhicule selon la revendication 1,
**caractérisée en ce que**
la pression de freinage qui intervient pour freiner les roues dirigeables afin de déterminer la fréquence de résonance des vibrations torsionnelles, pertinente pour le dimensionnement de l'amortisseur de vibrations, du système vibrant constitué de l'essieu du véhicule, des roues dirigeables et de la direction du véhicule, correspond à un freinage modéré avec un ralentissement de l'ordre de 2,5 m/s² à 3,5 m/s².

3. Direction de véhicule selon l'une des revendications précédentes,
**caractérisée en ce que**
l'amortisseur de vibrations est intégré dans la commande manuelle.

4. Direction de véhicule selon la revendication 3,
**caractérisée en ce qu'**
une unité d'airbag ou des parties de celle-ci, intégrée(s) dans la commande manuelle de direction, fait (font) fonction d'amortisseur de vibrations.
